# EUROPEAN PATENT APPLICATION

(11) **EP 3 734 434 A1**
(43) Date of publication of application: **04.11.2020**
(21) Application number: 19172081.2
(22) Date of filing: 01.05.2019
(51) Int. Cl.: G06F 3/0488, H04M 1/725

(54) **SYSTEM AND METHOD FOR OPTIMIZING A TOUCH SCREEN USER INTERFACE IN MOBILE DEVICES**

(71) Applicant: Advanced Digital Broadcast S.A., 1293 Bellevue (CH)
(72) Inventor: Dabrowski, Bartosz, 65-119 Zielona Gora (PL)
(74) Representative: Blonski, Pawel

(57) **Abstract**

Method, for optimizing a touch screen user interface in mobile devices, comprising a step of monitoring a use of a touch screen device, held by a user with one hand while being operated by the same hand, wherein the method further comprises the steps of: establishing a point of optimal accuracy having said touch screen coordinates present substantially in a geometric center of a limited virtual plane that may be drawn, on said touch screen, by a user, while maintaining said hold of the device; receiving a request to present on said touch screen a graphical user interface control; configuring said control such that the key area of said control is located in proximity to said point of optimal accuracy while other areas of said control are positioned further away from said point of optimal accuracy; and presenting said control, on said touch screen, according to said configuration.

## Description

### TECHNICAL FIELD

The present invention relates to a touch screen, and more particularly to optimization of displayed GUI (Graphical User Interface) elements for providing a faster and more convenient way of accessing functionality associated with said displayed GUI elements.

### BACKGROUND OF THE INVENTION

With the popularization of mobile devices, a touch or multi-touch interface is becoming more popular. Hence, there is a need to improve the ways of controlling said touch or multi-touch interface in an effective manner.

A touch device is typically referred to as a device whose control is realized, but not limited to, by giving commands or selecting objects or the like that are displayed on a touch screen by the means of touching that screen (i.e. touch commands or touch gestures).

A multi-touch device is typically referred to as a touch-sensitive device that can accept and process two or more of the touch commands at once. A touch point is typically referred to as a point of touching of the touch-sensitive device with a finger, a stylus, a capacitive pen or the like.

Adding a touch point is typically referred to as an action of placing a finger, stylus, capacitive pen or the like on the touch-sensitive device so that it touches its screen's surface. Breaking or removing a touch point is typically referred to as an action of moving a touching finger, stylus, capacity pen or the like away from the touch device so that it does not touch the screen of the touch-sensitive device any more.

Known touch-sensitive devices provide a variety of commands that allow for interaction with the objects displayed on a multi-touch screen. These include the following: a tap (touching the screen for a short time only), a two-finger tap (touching the screen for a short time only in two points simultaneously), a drag (touching an object on the screen, keeping a touch and moving the touch point to another location), a pinch (touching the screen at two places, keeping a touch and then moving the two touch points closer to each other), a zoom or a pinch out (touching the screen at two places, keeping a touch and then moving the two touch points further apart from each other), a flick (touching the touch-sensitive screen and immediately moving the touch point sidewards).

Known touch sensitive devices provide various well known interface elements. Those elements may be non-interactive meaning that there is not possible any interaction with these elements. Exemplary non-interactive element may be a screen or application title. The aforementioned elements may alternatively be interactive meaning that interaction is possible with those elements. Exemplary interactive elements is a drop-down list of previously visited web pages in a web browser or a scroll bar.

Present invention relates mainly to those interactive elements whose content is generated dynamically or ad hoc or tailored to the individual user's preferences or the like. The present invention attempts to optimize the effort, meaning time and accuracy, of interactions with the said content of the aforementioned interactive elements. In case of the already mentioned example of a drop-down list of previously visited web pages in a web browser, the interaction typically means selection of one of the text entries comprising one previously visited web page. Another exemplary interaction may by a flick gesture to remove the entry from history.

It is a well common characteristic of the mobile devices that the content of the aforementioned interactive elements is sequenced according to an order derived from the logic behind the data used to compose that content e.g. a browser will typically order the history suggestions according to last visited date or most visited counter or the like starting from the most suitable suggestion at the top and moving through less suitable suggestions down ending with the least suitable suggestion at the very bottom of the history. While this is driven by the logic behind browsing history it may not always be optimal to select the most suitable element from the top of the list especially when the touch-sensitive device is large and operated with only one hand.

Known solutions comprise variations of single hand mode, which when entered scales the whole application screen down to a size that is comfortably manipulated with one hand. However this solution affects the whole screen, makes text and other elements smaller and harder to read and consequently less accurate in manipulation. Such solutions are present for example in Android Samsung's ® keyboard and Gboard and are called "one-handed mode" application options.

Hence there is a need to optimize the interface to affect only a part of the screen of the touch-sensitive device, preferably only the part being interacted with in a way that will make the interaction possible and comfortable using only one hand, which at the same time holds the touch-sensitive device.

### SUMMARY AND OBJECTS OF THE PRESENT INVENTION

An object of the present invention is a method, for optimizing a touch screen user interface in mobile devices, comprising a step of monitoring a use of a touch screen device, held by a user with one hand while being operated by the same hand, wherein the method further comprises the steps of: establishing a point of optimal accuracy having said touch screen coordinates present substantially in a geometric center of a limited virtual plane that may be drawn, on said touch screen, by a user, while maintaining said hold of the device; receiving a request to present on said touch screen a graphical user interface control; configuring said control such that the key area of said control is located in proximity to said point of optimal accuracy while other areas of said control are positioned further away from said point of optimal accuracy; and presenting said control, on said touch screen, according to said configuration.

Preferably, said key area is a most relevant item of a list.

Preferably, said limited virtual plane is translated to screen coordinates resulting in defining an area of comfortable operation.

Preferably, sections of the area of comfortable operation, closer to its center are considered more comfortable than its outer sections.

Preferably, said establishing a point of optimal accuracy comprises the steps of: selecting the first gesture of a set of available gestures; providing an input screen; requesting a user to perform the gesture on the input screen, while holding the device with one hand, which is also used to operate the device; computing a geometrical center of the gesture and translating it to screen coordinates; verifying whether there are more gestures in the set and if there are, selecting the next gesture from the set of available gestures and moving to step of providing an input screen wherein if at the verifying step there are no more gestures available in the set of available gestures; computing, a global geometrical center of all the gestures' geometrical centers and setting this value as the point of optimal accuracy at step.

Preferably, the same gesture is present more than once in the set of available gestures.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

Another object of the present invention is a system configured to execute all steps of the method according to the present invention.

### BRIEF DESCRIPTION OF THE DRAWINGS

These and other objects of the invention presented herein, are accomplished by providing system and method for optimizing a touch screen user interface in mobile devices. Further details and features of the present invention, its nature and various advantages will become more apparent from the following detailed description of the preferred embodiments shown in a drawing, in which:
Fig. 1 shows schematically a structure of the touch-sensitive input device;
Fig. 2 presents an exemplary GUI embodying the present invention and comprising a typical web browser application;
Fig. 3 presents an exemplary sorting method for the elements of browsing history; and
Fig. 4 depicts an alternative solution to the one shown in Fig. 3;
Fig. 5 depicts another alternative solution to the one shown in Fig. 3;
Fig. 6 shows an example of an area of comfortable operation as well as a point of optimal accuracy;
Fig. 7 presents a method according to the present invention;
Fig. 8 shows a method of finding a point of optimal accuracy;
Fig. 9 presents a top-level method according to the present invention;
Figs. 10A-10B and Fig. 11 show examples of configuration of a GUI element based on an area of comfortable use as well as a placement of a point of optimal accuracy.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DESCRIPTION OF EMBODIMENTS

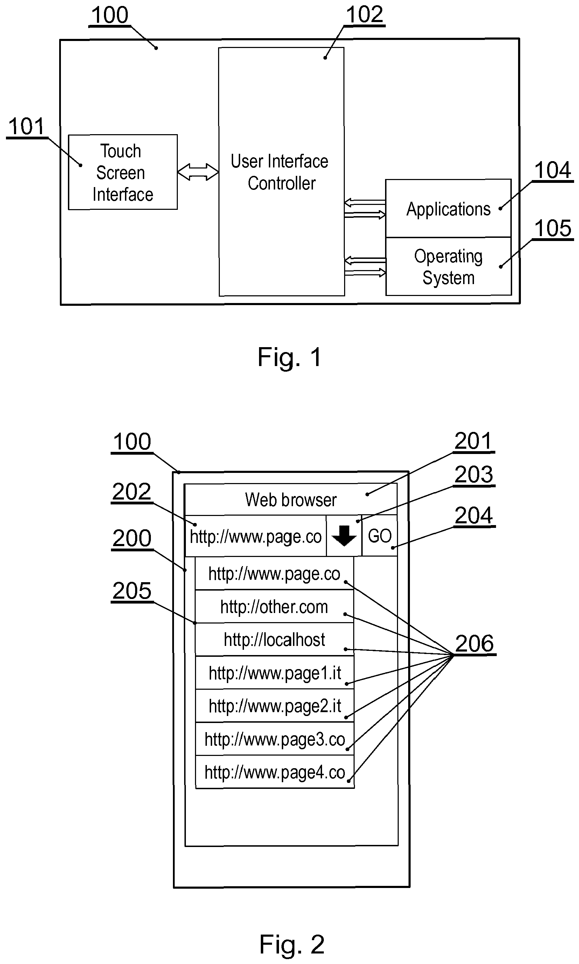

An exemplary embodiment of the present invention is a touch-sensitive device according to Fig. 1 utilizing the methods for controlling the user interface as described in the present invention.

Fig. 1 shows schematically a structure of the touch-sensitive input device (100). The touch-sensitive input device (100) comprises a touch screen interface (101) configured to receive touch input from a user and to display graphical data.

The touch screen interface (101) (also known as a touch-sensitive display) may be of any suitable type, such as a capacitive, resistive, infrared, or surface acoustic wave (SAW) touch screen.

A user interface controller (102) is configured to operate the method according to the invention, i.e. to control the display of various graphical objects on the screen in response to the touch input received via the touch screen interface (101).

This response may comprise, but is not limited to, a change in display or providing vibration feedback. The operation of the device (100) is controlled by an operating system (104) and various applications (105).

The touch input device (100) can be any type of a device comprising a touch screen, such as a personal computer or a smart-phone or a tablet or a laptop or a television set or the like. Naturally, such devices comprise common components such a main CPU, various kinds of memories and communication interfaces.

One aspect of the present invention is adjustment of GUI elements to ways the device 100 is operated on. The following description provides exemplary embodiments of such improvements.

The touch input device (100) is capable of displaying a graphical user interface (GUI) on its screen (200). Fig. 2 presents an exemplary GUI embodying the present invention and comprising a typical web browser application. The application displays, as part of said GUI, an application title (201) which is a non-interactive element. The web browser also comprises a web address field (202) and a drop down button (203) and a confirmation button (204).

Interaction with the drop down button (203) shows a drop-down list (205) comprising a list for browsing history entries (206). The user may further interact with those entries typically by tapping on one to select it and input the content of the tapped entry into address field (202). Next, the user may tap the button (204) to browse the selected web page.

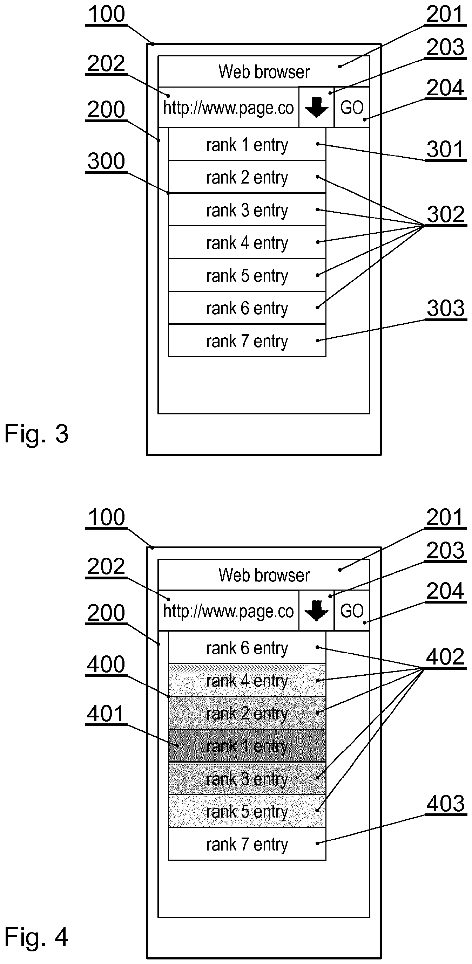

Fig. 3 presents the same device (100), however it presents an exemplary sorting method for the elements of browsing history (300). The elements (301 - 303) are sorted by relevance, said relevance meaning any criteria that are assumed by the underlying application.

The most relevant element (301) is placed first i.e. at the top while subsequent elements (302) are placed next i.e. beneath element (301) and finally the least relevant element is placed last i.e. at the bottom.

Such a solution is logically adequate towards the underlying application and assumed ranking or sorting method. It is also very usable when large screens are considered e.g. a laptop screen or the like where selection is made using a mouse or a keyboard or the like. Such solutions make it relatively irrelevant where the selected element is located on the screen. The difficulty and accuracy of the operation on those elements is similar.

Nevertheless, this is not the case when small display screens are considered. One exemplary device comprising a small screen is a smartphone, an interactive remote controller or an e-book reader. Such screens are often operated on using just one hand, which is also used to hold the device. This typically means that the users are holding the device in their palm and operating the touch-sensitive screen (200) using their thumb.

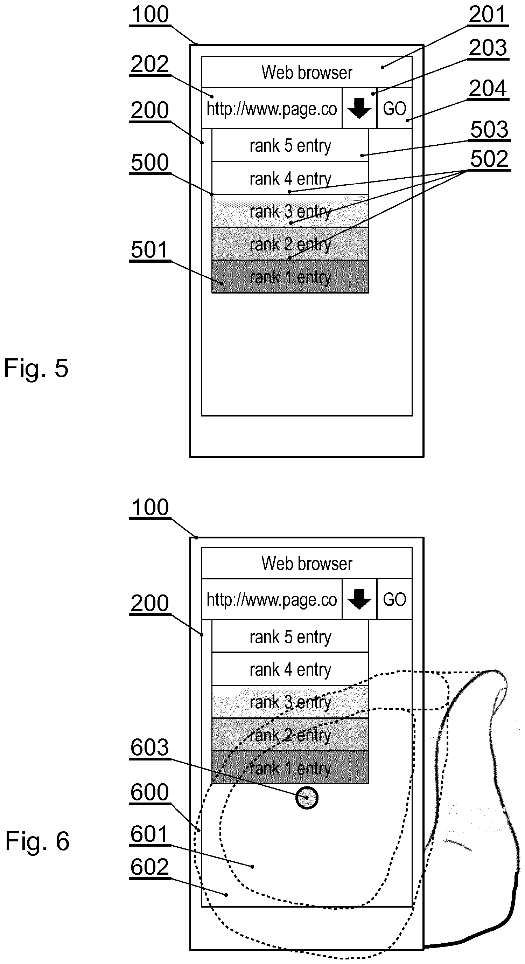

Other usage schemes are also possible and in no way limiting to the present invention. Consequently, the user is not able to reach every part of the screen (200) with similar ease and accuracy. Some areas of the screen (200) are more comfortable to operate on. An exemplary area that is comfortable to operate on may be the center of the screen while an exemplary area with little accuracy or comfort of operation may be screen top. Such an area of comfortable operation depends on placement of the users hand/palm and thumb. For example, the area of comfortable operation is a virtual geometric shape/plane that may be drawn by a user's thumb (on the display screen area) while holding the device (see Fig. 6) (i.e. while maintaining said hold of the device (100) and not moving said hold). Screen coordinates of such a drawn plane result in definition of said area of comfortable operation (600), which is a typical feature of touch screens.

Moreover, sections (601) of such area (600), closer to its center may be considered more comfortable than its outer sections (602).

A point on the screen (200) that is most comfortable to operate on, by a particular user on a particular device (100), is called a point of optimal accuracy (603) hereinafter.

Consequently, Fig. 4 presents an alternative solution with respect to the already presented device (100). The browsing history (400) is also ranked as in the case of history (300). However, in this case the browsing history (400) sorts its elements differently. The most relevant element (401) is placed on such a position on the list that its location is close to the point of optimal accuracy (603). Less relevant elements (402) are placed further from the point of optimal accuracy (603) and finally the least relevant element (403) is placed furthest from the point of optimal accuracy (603).

It is apparent, to one skilled in the art, that the specifics of sorting and placement of the elements (401, 402 and 403) may put two or more elements at the same distance from the point of optimal accuracy. This is to be construed as a corner case of the presented method and not as a limitation of any sort.

Fig. 5 presents yet another exemplary solution. The browsing history (500) sorts its elements from bottom up so that the most relevant element (501) (or in general a key element of a GUI control object) is placed at the bottom and the bottom is designed to be located close to the point of optimal accuracy. The less relevant elements (502) are placed above and the least relevant element (503) is positioned at the top of the list. It is apparent that in this manner, the most relevant element (501) is the closest to the point of optimal accuracy (as shown in Fig. 6, item (603)) while the least relevant element (503) is furthest from the point of optimal accuracy (603).

It is apparent to a one skilled in the art that the lists (205, 300, 400 and 500) of elements may be longer then the screen (200) can fit. In such case, a typical solution is to provide a way of scrolling the list up and down to gain access to more elements. For example, a scroll list may be provided, which will be adapted in terms of size to fit the area of comfortable operation (600).

Typically, the elements presented on lists (400) and (500) will be further highlighted in such a manner as to distinguish the most relevant elements by their color or style or size or the like. One exemplary embodiment of the highlight is to provide all elements on lists (400) and (500) with a background color of the higher intensity the more relevant an element is. Another exemplary embodiment of the highlight is to increase the size of elements' font by the higher factor, the more relevant an element is.

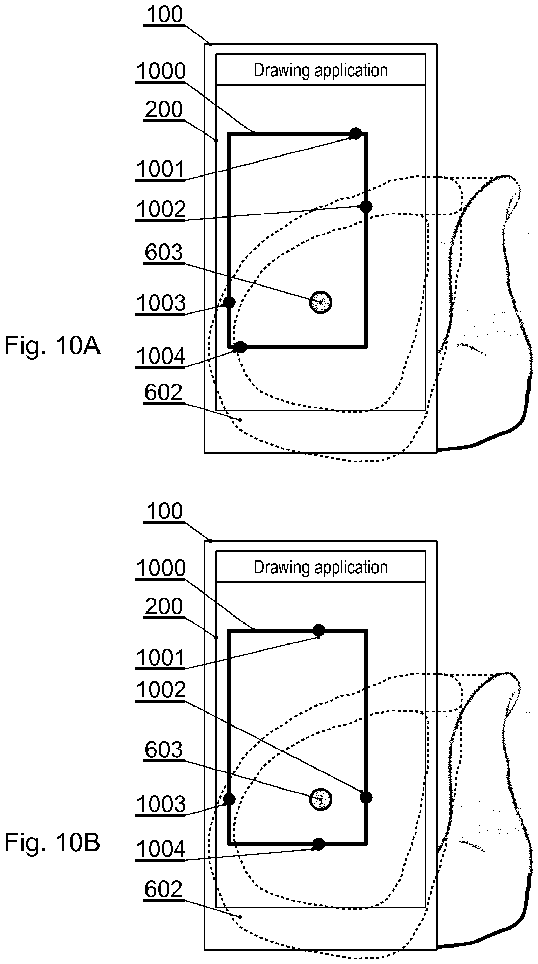

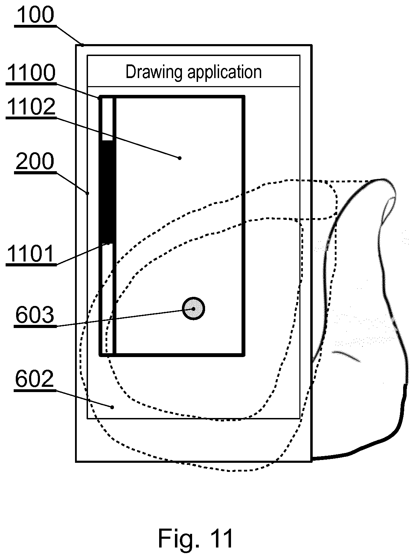

Other examples of key elements of a GUI control object may be as follows:
- a login/password text fields of a login screen;
- placement of an OK/cancel button of a dialog window;
- placement of an OK button of an information/message window;
- placement of size change manipulators as shown in Figs. 10A-B;
- placement of a scroll bar as shown in Fig. 11.

Another aspect of the present invention is a selection of the point of optimal accuracy as well as the area of comfortable operation (600). A skilled person will appreciate that the selection of the point of optimal accuracy is important for the aforementioned embodiments in order to provide an advantage in accuracy and comfort of operating on the screen (200). The present invention provides methods of determining the point of optimal accuracy (603) for a particular user using a particular device (100).

It is to be noted that the methods presented herein can be executed at various moments when operating the device e.g. after unlocking the screen or after powering the device on or only once after first configuration of the device or the like. It is apparent that some methods are more adequate to be used at particular time instants than others. However, this does not directly affect the methods themselves and is not to be construed as limiting to the present invention in any way.

One exemplary embodiment of a method of finding the point of optimal accuracy is a survey executed by a user on the mobile device (100) that will use this point of optimal accuracy. The survey construes a set of gestures to be done by the user on a dedicated (preferably empty) screen or a dedicated screen with one or more GUI elements. The survey is run on the first usage of the point of optimal accuracy and is explicitly asked for from the user. Afterwards, it can be repeated on demand e.g. by selecting an appropriate option from the device's settings.

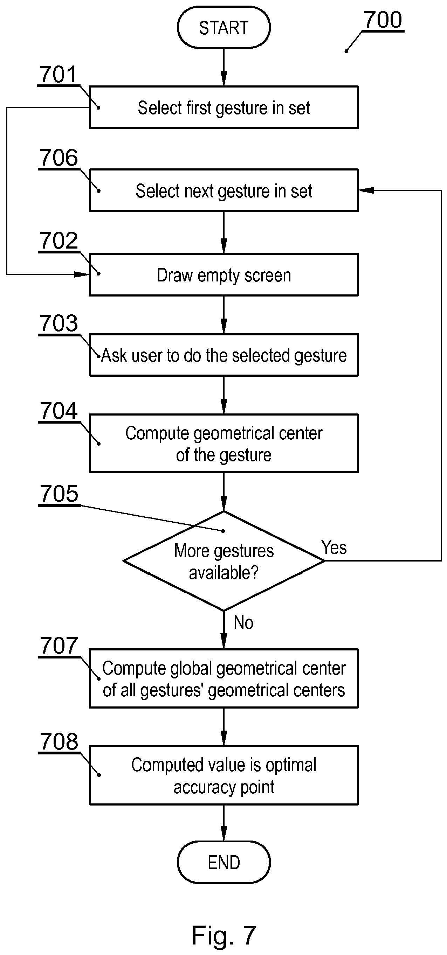

Fig. 7 presents a method (700) according to the present invention. The method begins with step (701) of selecting the first gesture of the set of available gestures (such as a substantially circular gesture (600) shown in Fig. 6 or a different gesture substantially forming a plane limited with a given shape). Next, at step (702) an empty screen is drawn and at step 703 the user is asked to perform the gesture on the empty screen, while holding the device with one hand, which is also used to operate the device, for example as shown in Fig. 6.

Subsequently, at step (704) a geometrical center of the gesture is computed and translated to screen coordinates. This center is a singe point (603) on the screen (200). In mathematics and physics, the centroid or geometric center of a plane figure is the arithmetic mean position of all the points in the figure. Said plane virtually drawn by a user, on the screen (200), may be considered the area of comfortable operation (600) while its zones/sections may be computed automatically as ranges between the outline of the shape and its geometric center e.g. 0 - 25%, 25% - 50%, 50% - 75% and the remaining section.

Next, at step (705), it is verified if there are more gestures in the set. If yes, the method selects the next gesture from the set of available gestures at step (706) and moves to step (702). If at step (705) there are no more gestures available in the set of gestures, the method moves on to step (707).

At step (707), a global geometrical center of all the gestures' geometrical centers is computed. This value becomes the resulting point of optimal accuracy at step (708).

It will be appreciated, by a person skilled in the art, that it is beneficial, from a statistical point of view, to perform the same gesture more then once in order to reduce randomness. This is easily reduced the presented method (700) by including said gesture more than once in the set of available gestures and therefore is not to be construed as a limitation.

A skilled person will also appreciate that different gestures may utilize different algorithms of computation of their geometrical centers. An exemplary method is a detection of a start and an end point of a scroll gesture and definition of a geometrical center in equidistant point between those two. Another exemplary method for the same gesture is definition of geometrical center swayed towards one of the points on a line connecting them due to an arbitrary notion that users begin the gesture closer to the point of optimal accuracy then they finish it.

Another exemplary embodiment of a method of finding the point of optimal accuracy is a survey done by a predefined group of users of a sample batch of devices of the same make or model or the like as the mobile device (100) that will use this point of optimal accuracy. The survey is done as previously according to method (700). However, in the present embodiment the survey is done only once before deployment of its results on the whole population of devices. After deployment the devices only use the point of optimal accuracy.

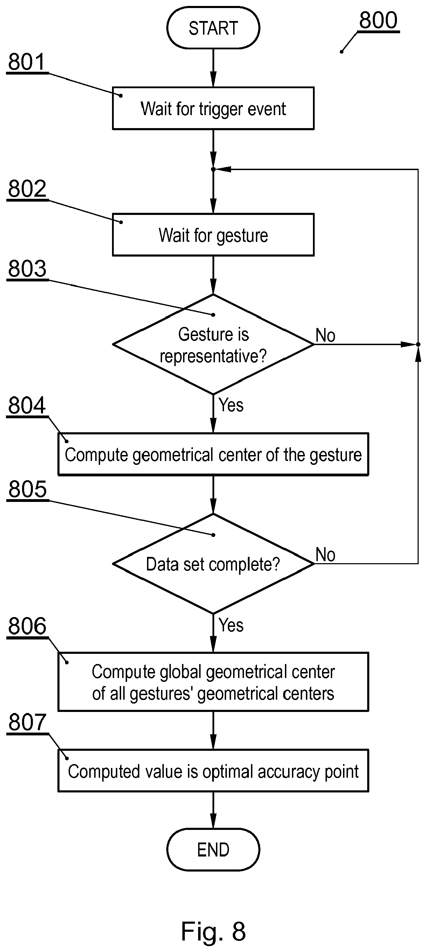

Another exemplary embodiment of a method of finding the point of optimal accuracy comprises statistical analysis of a set of gestures done by the user when using the device. The method (800) according to Fig. 8 begins with detection of a trigger event at step (801). Such event controls the moments when the method (800) is used. One exemplary trigger event of step (701) is unlocking of the device's (100) screen. Another exemplary trigger event of step (701) is powering the device on.

After an event has been detected, at step (701), the method (800) moves to step (802) to monitor for gestures done by the user of the device (100). For instance the method may wait for scrolls or pinches but not for taps. This step effectively makes initial qualification of the gesture to be included in computation of the point of optimal accuracy.

Next, at step (803) the method verifies whether the gesture is representative. A gesture may not be considered representative even though it was waited on at step (802). An exemplary reason may be the overall size of the gesture being too large or the gesture's selected parameters diverging from a defined range or the like. If gesture is not representative at step (803), the method goes back to step (802) in order to wait for the next gesture. If the gesture is considered representative at step (803), the method moves to step (804) and computes the gestures geometrical center. Next at step (705) it is verified whether the already collected data for the gestures since the trigger at step (701) is complete.

The data set may be complete e.g. due to collection of a sufficient number of data points of due to sufficient amount of time elapsed or the like. Next, at step (806) the method computes global geometrical center of all gestures collected since the trigger at step (801) and assumes the new point of optimal accuracy the be the computed value at step (807).

The presented method (800) may further be modified without departing from its original scope. For instance, the method may operate indefinitely, thus constantly updating the value of the point of optimal accuracy. It may also time out after a time and stop. It may be defined to abort or use the so collected data. These aspects are not to be construed as limiting to the present invention in any way and are optional only.

A skilled person will also observe that the set of gestures considered in step (802) should be carefully selected to avoid the point of optimal accuracy depending on GUI elements' layout. For instance, taps on icons should not typically be considered due to they restrain the user from free selection of the point on the screen that they will use for the gesture. Instead they enforce pats within the boundaries of their respective icons. This aspect shall not be construed as limiting to the present invention but rather a characteristic that ensures proper results of the methods presented.

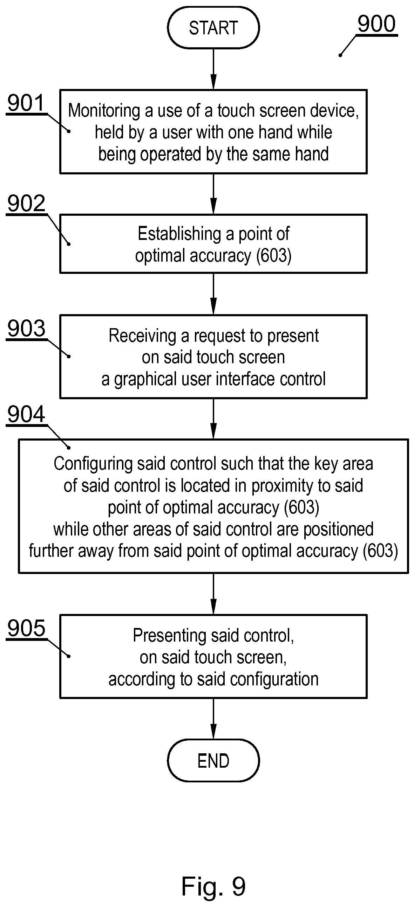

Fig. 9 presents a top-level method according to the present invention. The method starts at step (901) from monitoring a use of a touch screen device (100), held by a user with one hand while being operated by the same hand. Next there is executed establishing (902) a point of optimal accuracy (603) having said touch screen (200) coordinates present substantially in a geometric center of a limited virtual plane that may be drawn, on said touch screen (200), by a user, while maintaining said hold of the device (100). Subsequently, the process proceeds to receiving (903) a request to present on said touch screen a graphical user interface control (500).

Next, there is executed configuring (904) said control such that the key area (501) of said control (500) is located in proximity to said point of optimal accuracy (603) while other areas (502 - 503) of said control (500) are positioned further away from said point of optimal accuracy (603). Lastly, the process finishes with presenting (905) said control (500), on said touch screen (200), according to said configuration.

Figs. 10A-10B show examples of configuration of a GUI element based on the area of comfortable use (600) as well as a placement of the point of optimal accuracy (603). In this case the GUI controls are size change manipulators.

Fig. 10A shows the touch screen device (100) and screen (200) displaying a rectangular shape (1000) in a drawing application. The shape (1000) is ready to be scaled by the user and respective scale/size manipulators (1001) through (1004) are displayed. In this exemplary embodiment the manipulators (1001) through (1004) are positioned on the edges of the shape (1000) so that the distance from the manipulator to the area (602) is the smallest (as shown in the figure). This makes the manipulators easily accessible.

Fig. 10B is a similar example, but this time the GUI control (1000) is configured such that the manipulators (1001) through (1004) are to be positioned on their respective edges (allowed repositioning boundaries during configuration) as close to the point of optimal accuracy (603). In this case a setup of the GUI control (1000) may take into account the vertical screen coordinates of the point of optimal accuracy (603) in order to position the manipulators (1001 - 1004) i.e. the key elements. As an outcome of such configuration, the manipulator (1003) has remained at the same position while the manipulators (1001), (1002) and (1004) have been moved according to the configuration of the GUI element and the location of the point of optimal accuracy (603).

Fig. 11 shows yet another example of the device (100) showing on screen (200) a scrollable control (1100) of a scrollable area (1102) having a bar (1101). Such control is typically scrolled using a vertical flick gesture performed on top of it. The control (1100) has a bar (1101) present showing its current scroll position. This bar can be presented on either side of the control. However Fig. 11 shows the bar on the left due to in comparison with positioning on the right is is further away from the point of optimal accuracy (603). Since the bar (1101) cannot and needs not be manipulated by the user it is beneficial to place it thus so as to keep the area (1102) closer to the point of optimal accuracy (603) clear and easily accessible for manipulation.

It is clear that the principles of the present invention may be applied to displays other than two-dimensional (touch) displays such as holographic displays that may operate also in tree-dimensions. In case of such displays the coordinates of the point of optimal accuracy (603) will be defined in three axes.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for optimizing a touch screen user interface in mobile devices may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. Method for optimizing a touch screen user interface in mobile devices, the method comprising a step of monitoring (901) a use of a touch screen device (100), held by a user with one hand while being operated by the same hand, wherein the method is **characterized in that** it further comprises the steps of:
• establishing (902) a point of optimal accuracy (603) having said touch screen (200) coordinates present substantially in a geometric center of a limited virtual plane that may be drawn, on said touch screen (200), by a user, while maintaining said hold of the device (100);
• receiving (903) a request to present on said touch screen a graphical user interface control (500);
• configuring (904) said control such that the key area (501) of said control (500) is located in proximity to said point of optimal accuracy (603) while other areas (502 - 503) of said control (500) are positioned further away from said point of optimal accuracy (603); and
• presenting (905) said control (500), on said touch screen (200), according to said configuration.

2. The method according to claim 1 wherein said key area (501) is a most relevant item of a list (500).

3. The method according to claim 1 wherein said limited virtual plane is translated to screen coordinates resulting in defining an area of comfortable operation (600).

4. The method according to claim 1 wherein sections (601) of the area of comfortable operation (600), closer to its center are considered more comfortable than its outer sections (602).

5. The method according to claim 1 wherein said establishing (902) a point of optimal accuracy (603) comprises the steps of:
• selecting (701) the first gesture of a set of available gestures;
• providing an input screen (702);
• requesting a user (703) to perform the gesture on the input screen, while holding the device with one hand, which is also used to operate the device;
• computing (704) a geometrical center of the gesture and translating it to screen coordinates;
• verifying (705) whether there are more gestures in the set and if there are, selecting the next gesture from the set of available gestures (706) and moving to step of providing an input screen (702) wherein if at the verifying step (705) there are no more gestures available in the set of available gestures;
• computing (707), a global geometrical center of all the gestures' geometrical centers and setting (708) this value as the point of optimal accuracy at step.

6. The method according to claim 1 wherein the same gesture is present more than once in the set of available gestures.

7. A computer program comprising program code means for performing all the steps of the computer-implemented method according to claim 1 when said program is run on a computer.

8. A computer readable medium storing computer-executable instructions performing all the steps of the computer-implemented method according to claim 1 when executed on a computer.

9. System for optimizing a touch screen user interface in mobile devices (100), the system comprising:
• a touch screen interface (101);
• a user interface controller (102);
wherein the system is **characterized in that**
• said user interface controller (102) is configured to execute all steps of the method according to claim 1 under control of an application (104).
